# EUROPEAN PATENT APPLICATION

(11) **EP 1 614 911 A2**
(43) Date of publication of application: **11.01.2006**
(21) Application number: 05013634.0
(22) Date of filing: 24.06.2005
(51) Int. Cl.: F16C 11/06

(54) **Ball joint connectors**

(30) Priority: 08.07.2004 GB 0415333
(71) Applicant: Luk France S.A.S., 45520 Chevilly, Orleans (FR)
(72) Inventor: Rocquet, Stephane, 45640 Sandillon (FR); Sainton, Denis, 45520 Chevilly (FR)
(74) Representative: Morrall, Roger

(57) **Abstract**

A ball joint connector (10) for an actuating linkage has a ball end (14) for connection with a first linkage member and a socket member (11) for connection with a second linkage member. The socket member (11) includes a socket (12), and a socket cage (13) for insertion into the socket. The socket cage has a ball end receiving recess (15) into which the ball (14) can be inserted when the cage is not externally confined. The cage having retention means (16,19) engageable with a first formation (17) on the socket member to hold the cage in a partially inserted position relative to the socket, in which position the ball end can be inserted into the recess. The retention means (16,19) is also engageable with a second formation (20) on the socket member to hold the cage (15) in a fully inserted position in the socket in which position the cage is externally confined by the socket member to prevent disengagement of the ball end from the recess thus connecting the first and second linkage members. The connector is particularly suitable for use as part of a clutch actuation system.

## Description

This invention relates to ball joint connectors for connecting together members of an operating linkage such as for example the operating linkage of a vehicle clutch actuator.

It is an object of the present invention to provide an improved form of ball joint connector which is particularly suitable for use in the connection of a clutch actuator piston rod with an associated actuating pedal.

Thus according to the present invention there is provided a ball joint connector for an actuating linkage comprising a ball end for connection with a first linkage member and a socket member for connection with a second linkage member, the connector being characterised in that the socket member includes a socket, and a socket cage for insertion into the socket, the socket cage having a ball end receiving recess into which the ball can be inserted when the cage is not externally confined, the cage having retention means engageable with a first formation on the socket member to hold the cage in a partially inserted position relative to the socket, in which position the ball end can be inserted into the recess, and being engageable with a second formation on the socket member to hold the cage in a fully inserted position in the socket in which position the cage is externally confined by the socket member to prevent disengagement of the ball end from the recess thus connecting the socket member and ball end.

Such a ball joint connector is particularly suitable for use in a clutch actuator linkage where the socket member may be conveniently formed integrally with an actuating rod used to operate a piston of the clutch actuator. This is a particularly convenient arrangement when both the actuating rod and socket member are formed from plastics material.

The construction also has the additional advantage is that the cage may be delivered to the vehicle manufacturer in its partially installed condition where it is held captive by engagement of the retention means with the first formation. The assembly of the actuating linkage is then easily completed by the vehicle manufacturer who simply introduces the ball end into the cage recess and then pushes the cage further into the socket to engage the retention means with the second formation thereby completing the connection of the linkage.

Preferably the cage includes guide means in the form of a projection which engages an opening in the base of the socket to retain the correct orientation of the cage and socket member in both the partially and fully inserted positions.

In a preferred construction the retention means comprises flexible projections which are deflected by the walls of the socket as the cage is inserted into the socket and which snap behind the first and second formations on the socket to hold the cage in the partially and fully inserted positions respectively.

Preferably there are two pairs of flexible projections, the first pair which snap behind the first formation and the second pair which snap behind the second formation. The walls of the cage are preferably slotted to allow expansion of the cage for insertion of the ball end when the cage is not externally confined.

In an alternative construction each projection snaps behind both the first and second formation.

The present invention will now be described , by way of example only with reference to the accompanying drawings in which:-
Figure 1 shows the ball joint connector of the present invention in an exploded condition;
Figure 2 shows the ball joint partially assembly with the cage in the partially inserted condition;
Figure 3 shows the ball joint connector used as part of a clutch actuation linkage;
Figure 4 shows a plan view of the ball joint connector of figure 1;
Figures 5, 6 and 7 show sections on lines A-A, B-B and C-C of figure 4;
Figures 8, 9 and 10 show stages in the assembly of the ball joint connector;
Figures 11, 12 and 13 show stages in the disassembly of the ball joint connector;
Figure 14 shows a further form of ball joint connector in accordance with the present invention in an exploded condition;
Figure 15 shows a plan view of the ball joint connector of Figure 14;
Figures 16 and 17 show sections on lines A'-A' and B'-B' of Figure 15;
Figures 18 and 19 show more detailed perspective views of the socket of the connector of Figure 14;
Figures 20, 21 and 22 show stages in the assembly of the ball joint connector of Figure 14, and
Figures 23 and 24 show stages in the disassembly of the ball joint connector of Figure 14.

Referring to the drawings, the ball joint connector 10 of the present invention comprises a socket member 11 having a socket 12 formed therein, a socket cage 13 for insertion in the socket 12 and a ball end 14 for insertion in a recess 15 formed in the cage 13.

The socket member 11 is formed integrally with a piston push rod 22 of a clutch master cylinder 30 which is operated by a pedal 31 on which ball end 14 is carried. Master cylinder 30 is connected via a conduit 32 with a slave cylinder 33 which operates a clutch operating lever 34 which projects from a clutch housing 35. The slave cylinder may alternatively comprise a concentric slave cylinder inside housing 35 surrounding the drive shaft.

The cage 13 has a first pair of retention means in the form of flexible projections 16 which are engageable with a first formation in the form of shoulder 17 on the socket member (see figure 7) to hold the cage in a partially inserted position in the socket 12.

In this partially inserted position, slots 18 formed in the wall of cage 13 allow the cage to expand to allow the insertion of ball end 14.

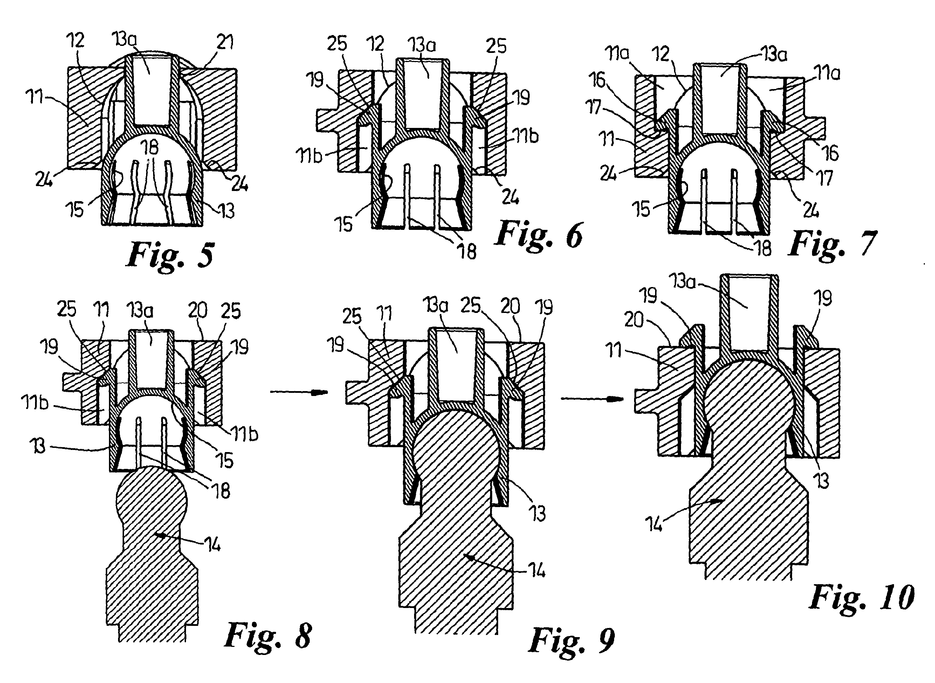

With the cage fully inserted into socket 12 (see figure 10) a second pair of flexible projections 19 engage behind a second formation in the form of shoulder 20 formed on the socket member to hold the cage member in the fully inserted position in which it is externally confined by the walls of the socket to prevent disengagement of the ball joint from the recess 15.

The cage 13 includes a tubular projection 13a which engages a hole 21 in the base of socket 12. Projection 13a acts as a guide to ensure the correct positioning of the cage relative to the socket 12 in both the partially and fully inserted positions of the cage.

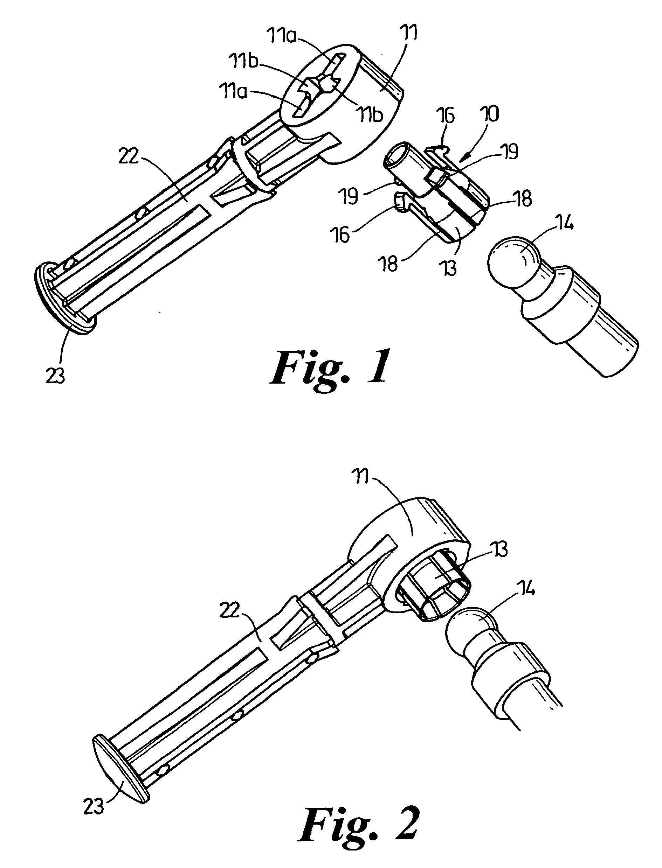

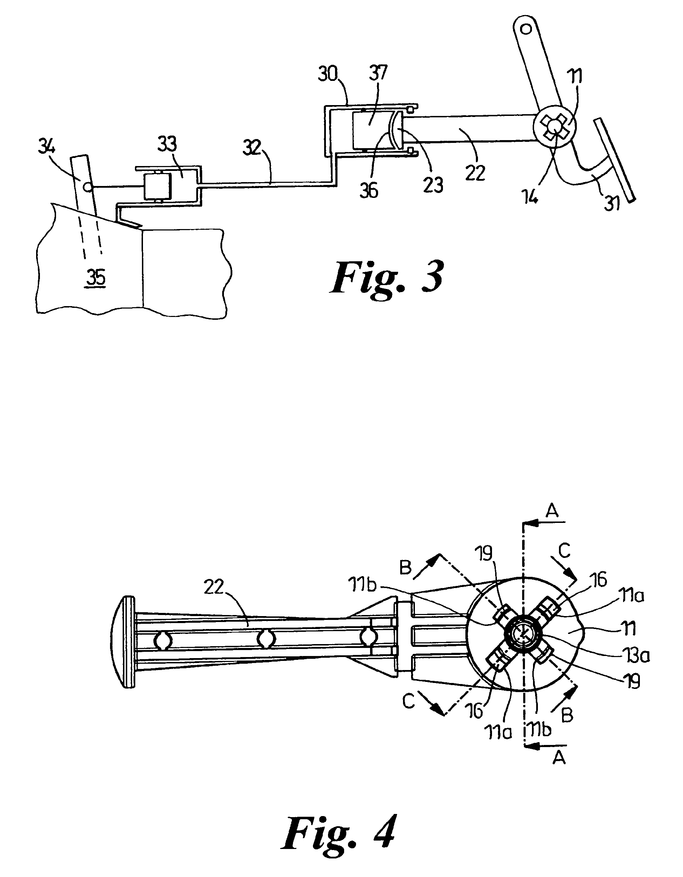

As shown in figures 1, 2 and 4 the push rod 22 of the master cylinder has a part spherical convex end portion 23 which co-operates with a similarly shaped recess 36 in the associated master cylinder piston 37 to allow articulation of the push rod through a limited angle relative to the piston. This is shown diagramatically in figure 3.

Connection of the ball end 14 with the push rod 22 is completed as follows. The cage 13 is introduced into the socket 12 when the flexible projections 16 are deflected inwardly as they pass along the first narrower parts of slots 11 a which have a tapering lead-in 24 and flexible projections 19 pass undeflected along the first wider part of slots 11 b. Insertion of the cage continues until the flexible projections 16 snap behind the first shoulder 17 on the socket member 11 (see figure 7). At this point the second flexible projections 19 contact a further tapering lead-in 25 at the start of the second part of slots 11 b (see figure 6) to provide a positive feedback to the assembler that the first stage of insertion has been completed. The connection is then in the partially assembled condition shown in figure 2.

This is the position in which the piston rod and associated master cylinder are normally supplied to the vehicle manufacturer.

Connection of the linkage is completed on the vehicle production line by inserting ball end 14 into recess 15 as shown in figures 8 and 9. This insertion is allowed by the slots 18. The ball end and cage 13 are then pushed further into socket 12 (see figure 10) with the second flexible projections 19 being deflected inwardly as they pass along the narrower second part of slot 11 b until they snap behind the second shoulder 20 and the projections 11 a passing undeflected along the wider second part of slots 11a. With the projections 19 snapped behind shoulder 20 the walls of the cage 13 are not able to expand outwardly due to contact with parts of the surrounding socket member 11 thus locking ball end 14 in recess 15. The linkage connection has thus been completed.

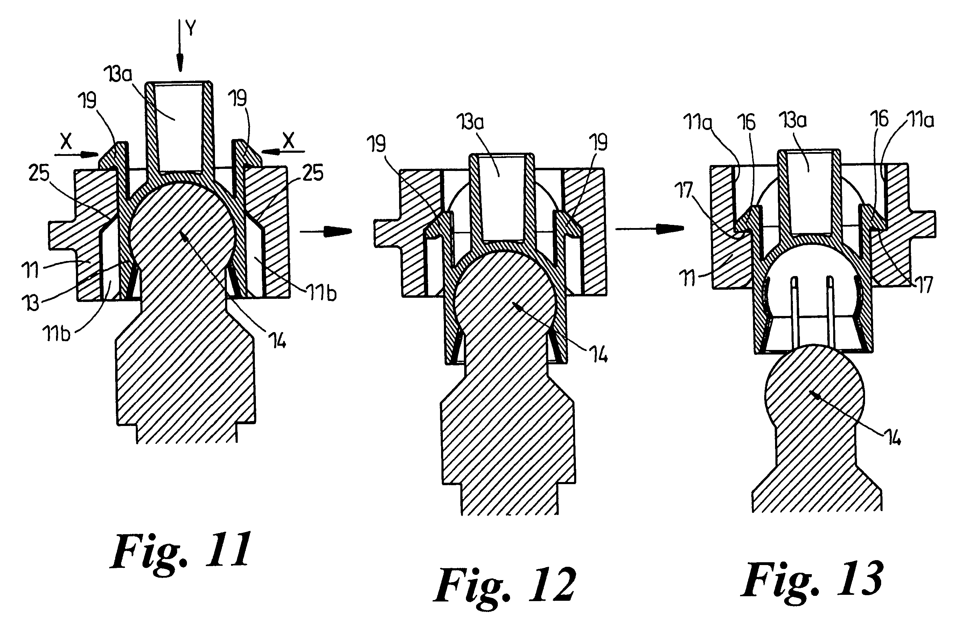

The ball joint can be dissembled (see figures 11 to 13) by pushing radially inwardly on the second flexible projections 19 (see arrows X in figure 11) and at the same time pushing downwardly on the tubular projection 20 (see arrow Y in figure 11) thus pushing the cage to the partially inserted position shown in figure 12. As indicated previously, when in this condition the ball end 14 can be disengaged in the recess 15 as shown in figure 13 thus completing the disassembly of the ball joint.

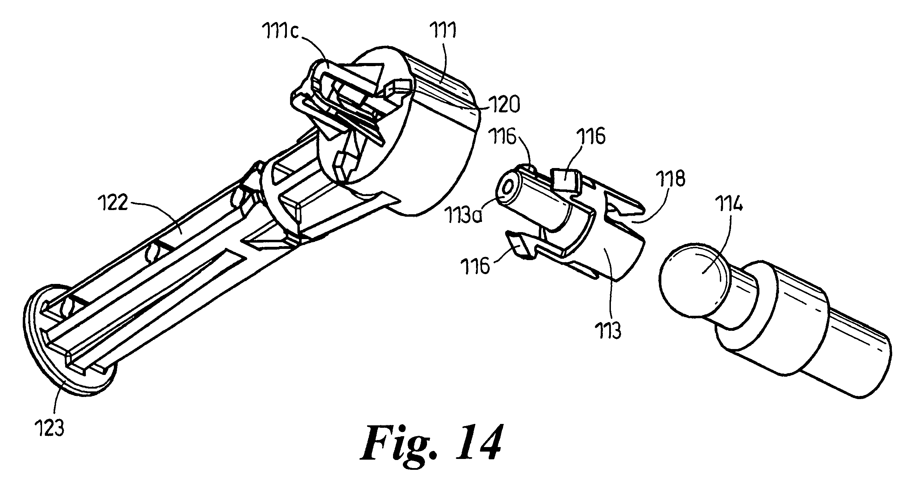

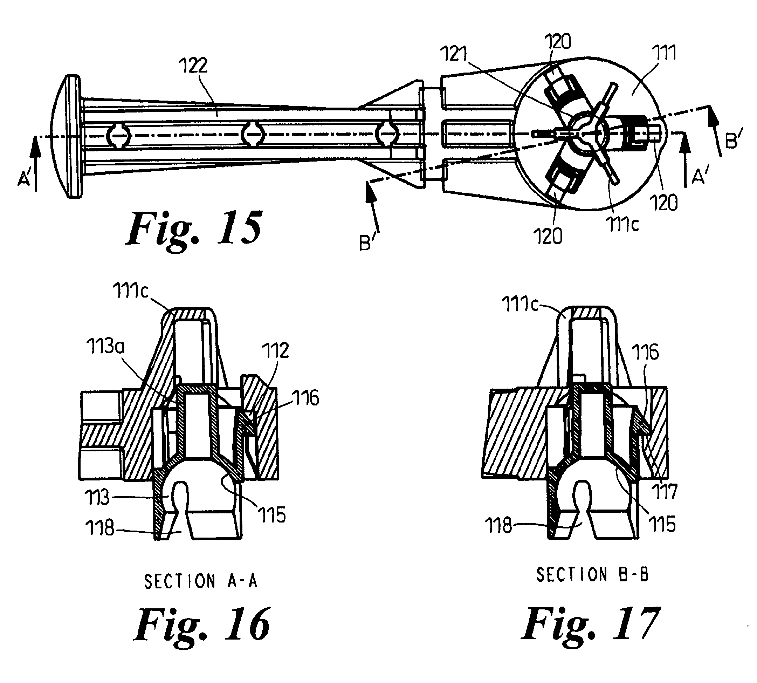

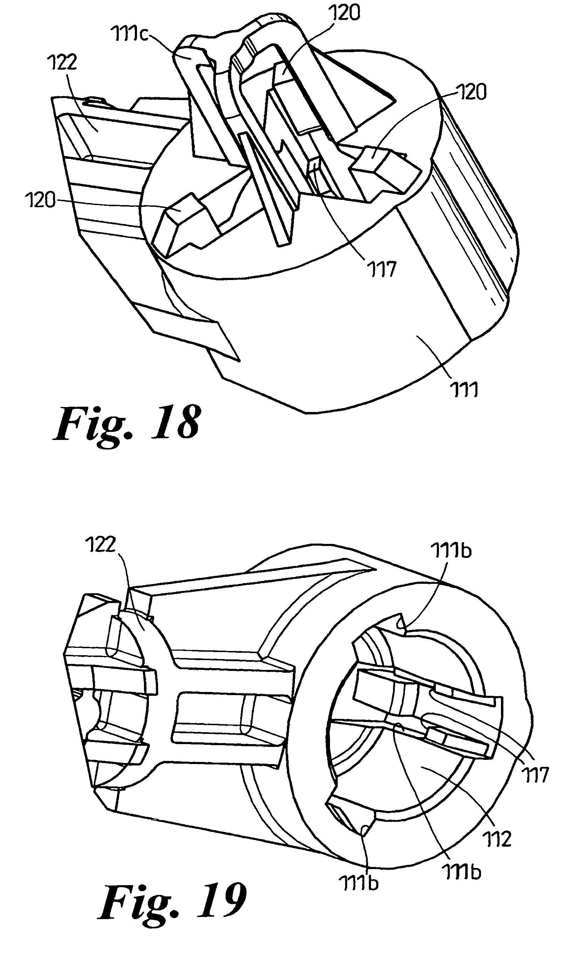

Figures 14 to 24 show details of an alternative form of the invention in which only three flexible projections 116 are provided each of which cooperate with first and second formations on the socket member 111 to hold the cage 113 in the partially and fully inserted positions.

Socket 112 is provided with three pairs of first shoulders 117 which form the first formations which are engageable by flexible projections 116. Three second formations in the form of shoulders 120 are also provided on socket member 111. Again a tubular projection 113a formed on the cage 113 engages a hole 121 in the base of the socket 112.

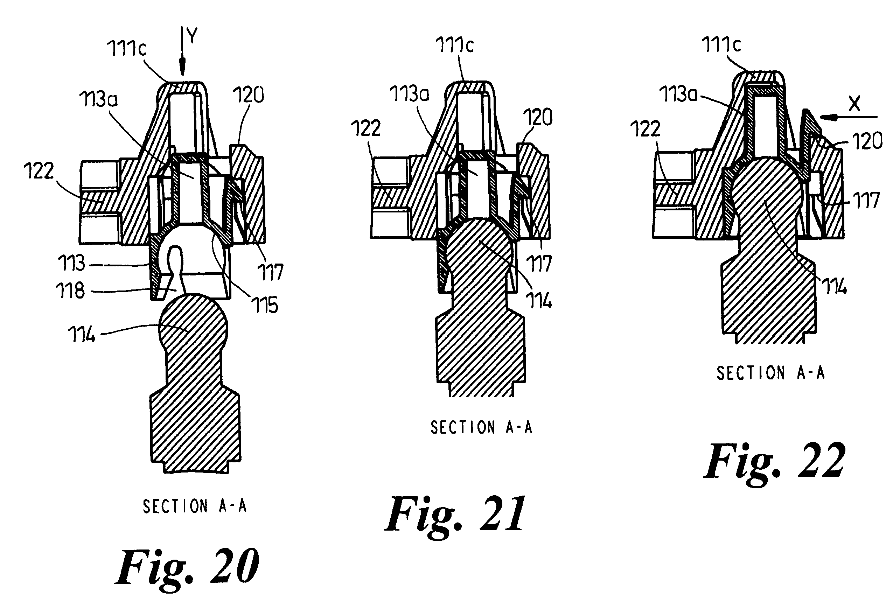

Above hole 121 a cage 111 c is provided which the assembler of the ball joint connector can use to press down in the direction of arrow Y of figure 20.

Referring to figures 20, 21 and 22 this shows the assembly sequence of the ball joint connector. The cage 113 is held in the partially inserted position shown in figure 20 by the engagement of flexible projections 116 with shoulders 117. Ball end 114 is then inserted into recess 115 as shown in figure 21 and the ball end and cage 113 are then pressed further into socket 112 until the flexible projections 116 engage on the shoulders 120 as shown in figure 22.

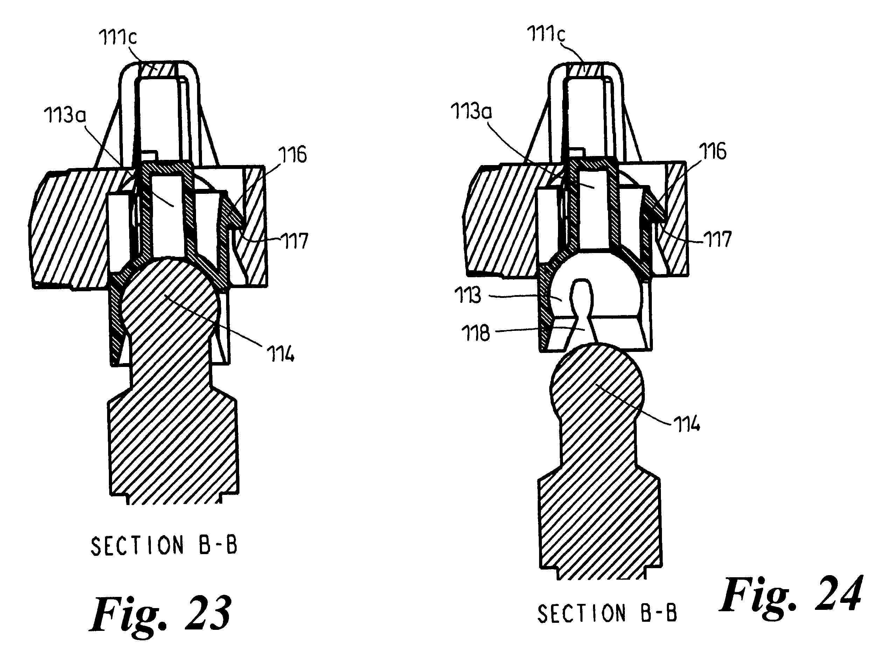

The ball end can be released from the socket 112 by pressing on the flexible projections 116 in the direction of the arrow X of figure 22 which allows the cage 113 to move to the partially inserted position shown in figure 23. When in the figure 23 position the ball end can be removed from the recess 115 as the cage can expand due to the slots 118 which are no longer confined within the socket 112.

Thus the alternative construction shown in Figures 14 to 24 operates in essentially the same manner as the previous construction but the flexible projections 116 engage both the first formations 117 and the second formations 120 of the socket member 111.

The cage 111 c provided in the embodiment described above can also be used in the first embodiment of the invention and is helpful in allowing the operator to apply force to the socket member 111 to engage the first formations 17 or 117 and the second formations 20 or 120 whilst allowing the flexible projection 116 to be easily released by the fingers of the operator since the cage does not cover the flexible projections 116 when they are engaged with the shoulders 120.

As will be appreciated the ball joint of the present invention has a number of advantages. Firstly the socket member can be formed integrally with its associated linkage member (e.g. the piston push rod). The cage and socket member can be delivered to the customer in a partly assembled condition with the cage member held captive so that it cannot be lost during delivery.

The assembly procedure is also simple being a two state process which does not involve the use of any further tooling. The arrangement is robust and cannot suffer misalignment due to the co-operation of the tubular projection 13a or 113a and the hole 21 or 121 in the base of the socket 12 or 112.

Also dismantling of the connection is simple again requiring no additional tooling and after dismantling the cage is again held captive for subsequent reassembly.

Although the invention has been described above in relation to a linkage for a clutch actuator it is not limited to such use and can be used to connect any two members of any linkage.

## Claims

1. A ball joint connector (10) for an actuating linkage comprising a ball end (14) for connection with a first linkage member, a socket member (11) for connection with a second linkage member, connector being **characterised in that** the socket member (11) includes a socket (12), and a socket cage (13) for insertion into the socket, the socket cage having a ball end receiving recess (15) into which the ball (14) can be inserted when the cage is not externally confined, the cage having retention means (16,19) engageable with a first formation (17) on the socket member to hold the cage in a partially inserted position relative to the socket, in which position the ball end can be inserted into the recess, and being engageable with a second formation (20) on the socket member to hold the cage (15) in a fully inserted position in the socket in which position the cage is externally confined by the socket member to prevent disengagement of the ball end from the recess thus connecting the first and second linkage members.

2. A connector according to claim 1 **characterised in that** the cage (13) has guide means (13a) which engage co-operating guide means (21) on the socket member (11) to retain correct alignment of the cage and socket member in both partially and fully inserted positions.

3. A connector according to claim 2 **characterised in that** the guide means comprises a projection (13a) on the cage (13) which extends through an opening (21) in the base of the socket (12).

4. A connector according to claim 3 **characterised in that** the projection (113a) on the cage (113) extends through the base of the socket into a cage (111c) formed on the exterior of socket member (111).

5. A connector according to any one of claims 1 to 4 **characterised in that** the retention means comprises flexible projections (16,19) which are deflected by the walls of the socket (12) as the cage (13) is inserted into the socket and which snap behind first and second formations (17,20) on the socket member (11) to hold the cage in the partially and fully inserted positions respectively.

6. A connector according to claim 5 **characterised by** having two pairs of flexible projections (16,19), a first pair (16) which snap behind the first formation (17) and a second pair (19) which snap behind the second formation (20).

7. A connector according to claim 5 **characterised in that** each projection (116) snaps behind both the first (117) and second (120) formation.

8. A connector according to any one of claims 1 to 7 **characterised in that** the walls of the cage (13) are slotted (18) to allow expansion of the cage for insertion of the ball end when the cage is not externally confined.

9. A connector according to any of claims 1 to 8 **characterised in that** the cage (13) is made from plastics material.

10. A connector according to any one of claims 1 to 9 **characterised in that** the socket member (11) is made from plastics material.

11. A connector according to claim 10 **characterised in that** the socket member (11) is formed integrally with the second linkage member (22).

12. A connector according to any on of claims 1 to 11 **characterised by** being used in a linkage to connect a pedal (31) with a hydraulic actuator (30).

13. A connector according to claim 12 **characterised in that** the actuator (30) has a piston (37) slideable in a bore and the socket member (11) is carried by a piston actuation rod (22).

14. A clutch actuation system **characterised by** the inclusion of a ball joint connector (10) according to any one of claims 1 to 13.
